# EUROPEAN PATENT SPECIFICATION

(11) **EP 3 245 892 B1**
(45) Date of publication and mention of the grant of the patent: **10.07.2019**
(21) Application number: 16186793.2
(22) Date of filing: 01.09.2016
(51) Int. Cl.: A45B 25/00, A45B 25/14, A45B 25/16, A45B 23/00

(54) **UMBRELLA WITH A COMBINATION OF AN AUTOMATIC AND MANUAL OPENING AND CLOSING STRUCTURE**
SCHIRM MIT EINER KOMBINATION AUS EINER AUTOMATISCHEN UND MANUELLEN ÖFFNUNGS- UND SCHLIESSSTRUKTUR
PARASOL DOTÉ D'UNE STRUCTURE COMBINÉE D'OUVERTURE ET DE FERMETURE AUTOMATIQUE ET MANUELLE

(30) Priority: 19.05.2016 CN 201620465113 U
(43) Date of publication of application: 22.11.2017
(73) Proprietor: Yotrio Group Co., Ltd, Zhejiang Province 317004 (CH)
(72) Inventor: XIE, Jianping, 317007 Linhai (CN)
(74) Representative: Schulz Junghans Patentanwälte PartGmbB

(56) References cited:
- DE-A1-102009 036 213
- US-A1- 2008 023 053
- US-B1- 7 406 976

## Description

### Field of the invention

The present invention relates to an umbrella (parasol) that possesses an automatic and manual (non-automatic) umbrella opening and closing structure.

### Background of the invention

Umbrellas are everyday items in modern life, and can be divided into fold umbrella and straight umbrella. Umbrellas with an automatic opening and closing function are available on the market. Regarding the automatic opening and closing function the fold umbrella requires little room for its opening and closing and its structure is easier to design. The structure of straight umbrellas, which requires a longer motion, is rather difficult to design. Chinese patent CN101999785A has introduced an electric umbrella, comprising a movement rod and a tube shaped umbrella column. The movement rod's lower end is inserted inside the umbrella column and its upper end is fixed to the umbrella plate. The umbrella column possesses a lower umbrella plate, an upper umbrella plate and there is an umbrella bone connected to the lower umbrella plate. The umbrella column's upper end possesses a pulley structure comprising ropes. The movement rod's lower end possesses a middle hole, and one end of the ropes is connected and penetrated into the middle hole. The other end is fixed to the lower umbrella plate. Inside the umbrella column there is a transmission structure, a power motor and control panels, which are respectively connected to the power motor. The transmission structure is fixed on the movement rod's lower end. The power motor's output axle is connected with the transmission structure, and it can make the movement rod move up and down with the help of the transmission structure. However, such an umbrella structure is extremely complex and difficult as well as expensive to produce. In addition, such umbrella structure does not possess an electric umbrella opening and closing function, thus they are hard to operate. Nowadays there are several electric parasols known. Such products are largely applied at beaches, villas, swimming pools, cafes and other outdoor areas. However, since most electric umbrellas are driven by a power motor, in case of an empty battery there is no way to open or close the umbrellas.

Another automatic umbrella of the prior art is disclosed by US 7 406 976 B1.

### Description

This invention aims to solve the current technical problems mentioned above. It provides a combined automatic and manual (non-automatic) umbrella opening and closing structure, as defined by claim 1, in order to enable an electric umbrella's opening and closing function when there is no electricity.

The purpose of this invention is achieved through the following technical solutions.

According to the invention a combined automatic and manual umbrella opening and closing structure is provided that includes a motor structure and a handle structure in order to lead the opening and closing of the umbrella. The motor structure includes a screw rod and a power motor which leads the screw rod to rotate. The screw rod is connected to a bevel gear one. The handle structure includes a bevel gear two and the handle. The bevel gear two and bevel gear one are combined with a transmission connection and the handle is connected with bevel gear two through a clutch transmission structure.

The invention relates to an umbrella with a combination of an automatic and manual opening and closing structure comprising a motor structure and a handle structure for opening and closing the umbrella, wherein said motor structure includes a screw rod (1) and a power motor (2) that drives the screw rod (1), said screw rod (1) is connected to a bevel gear one (3), said handle structure includes a bevel gear two (4) and a handle (5), said bevel gear two (4) and said bevel gear one (3) are connected through a harmonic gear drive and said handle (5) is connected to said bevel gear two (4).

In certain embodiments, the umbrella comprises a tube shaped umbrella pole (15) and said umbrella pole (15) is installed with a handle case (16), comprising a clutch structure comprising
- a sliding device (6), wherein said sliding device (6):
   - is located inside the handle case's (16) inner cavity,
   - is located on the surface of the umbrella pole (15), and
   - has a sliding direction vertical to the umbrella pole's (15) length direction,
- a return spring (7), wherein said return spring (7) is installed between said bevel gear two (4) and said driving axle (9),
- a button (8), wherein said button (8) is located on said handle case (16) and said button (8) can lead said sliding device (6) and said driving axle (9) to slide together as one, and
- a driving axle (9), which is connected to
   - said bevel gear two (4) through a clutch connection,
   - said sliding device (6), and
   - said handle (5).

Further, according to the invention, said screw rod (1) is installed along the umbrella pole's (15) length direction, and between said screw rod (1) and said power motor (2) is a screw rod bearing base (12) and a screw rod connecting device (11), wherein said screw rod connecting device (11)
- has an upper end that is fixed to said screw rod (1), and
- has a lower end that is connected to the power motor (2),
- is connected to said screw rod bearing base (12) through a bearing two (14), and said bevel gear two (4) is installed on said screw rod bearing base's (12) walls.

In certain embodiments, said screw rod bearing base's (12) side walls successively possess a bevel gear bearing base (13), a bearing base one (17) and a bearing base two (18), said bevel gear two (4) is installed with bearing one (10), said bearing one (10) is connected inside the bevel gear bearing base (13), said driving axle (9) is installed between said bearing base one (17) and said bearing base two (18), and said bearing base two (18) is located on the surface of said bearing base one (17), and said return spring (7)
- is located on the surface of said bearing base one (17),
- is inside the inner cavity of said bearing base two (18),
- has one end that is leaned against said driving axle's (9) locating spot (91), and
- has another end that is leaned against said bearing base two (18).

In certain embodiments, said sliding device (6) is installed on said screw rod bearing base's (12) outside ring-like structure, and said driving axle's (9) one end is used to connect with said bevel gear two (4) through a clutch connection, another end is leaned against the sliding device's (6) inside wall.

In certain embodiments, said sliding device (6) possesses a drive surface one (63), said drive surface one (63) inclines to said sliding device (6) sliding direction, and said button (8) possesses a drive surface two (81), said drive surface two (81) slides and is leaned against said drive surface one (63).

In certain embodiments, said sliding device (6) includes a sliding device one (61) and a sliding device two (62) which can be formed into a ring-like structure, said button (8) is connected to said sliding device one (61), said driving axle (9) is located between said screw rod connecting device (11) and said sliding device two (62), and said driving axle (9) is leaned against said sliding device two (62), and said handle's (5) spindle is inserted inside said sliding device two (62), and said handle's (5) spindle and said driving axle (9) can be disassembled and connected.

In certain embodiments, said screw rod connecting device (11) and said power motor (2) is connected through a coupler one (19), a coupler two (20) and a coupler three (21).

In certain embodiments, said button (8) is connected to a gasket one (22) through a bolt (23), said gasket one (22) can be leaned against said handle case's (16) inside wall and avoids said button (8) falling out of said handle case (16).

In certain embodiments, said umbrella pole (15) possesses a string (24).

In certain embodiments, said locating spot (91) possess a gasket two (25).

When the umbrella is provided with electricity, the clutch structure remains separated and the umbrella achieves its opening and closing through its power motor. In particular, the power motor leads the screw rod to rotate and the screw rod leads the umbrella plate or inside pipe to rise or fall in order to achieve the opening and closing of the umbrella. In the case that there is a lack of electricity and the power motor cannot be used, the clutch structure is adjusted to a junction state. Then the handle is able to rotate bevel gear two and bevel gear two leads bevel gear one to rotate. In consequence bevel gear one leads the screw rod to rotate in order to achieve the opening and closing of the umbrella. The umbrella of the present invention enables the opening and closing of the umbrella either automatically or manually. Between these two methods can be switched through the clutch structure and they do not effect each other's normal functioning.

In certain embodiments, the umbrella includes a tube shaped umbrella pole. This umbrella pole is installed with a handle case comprising a clutch structure that includes a sliding device, a return spring, a button and a drive axle in order to clutch connect with bevel gear two. The sliding device is slide connected to the handle case's inside, and the sliding device is located on the outside of the umbrella pole. The sliding device's sliding direction is vertical to the umbrella pole's length direction and the driving axle is connected to the sliding device. The handle is connected to the driving axle and the button is located on the handle case. The button can lead the sliding device and driving axle to slide together as one. The return spring is installed between bevel gear two and the driving axle. When pressing the button, the button leads the sliding device and drive axle to slide inside the umbrella pole, which allows the drive axle to combine with bevel gear two. The handle leads the bevel gear two to rotate, thus it changes from an automatic opening umbrella mode to a manual opening umbrella mode. In addition, an insert and cam method clutch structure can also be applied.

In certain embodiments, the screw rod is installed along the umbrella pole's length direction. Between the screw rod and the power motor is a screw rod bearing base and a screw rod connecting device. The screw rod connecting device's upper end is fixed to the screw rod and the lower end is connected to the power motor. The screw rod connecting device is connected to the screw rod bearing base through bearing two and bevel gear two is installed on the screw rod bearing base's walls. When the drive axle and bevel gear two are separated, then the umbrella is in an electric driven mode and bevel gear two does not participate.

In certain embodiments, the screw rod bevel gear base's side walls successively possess a bevel gear bearing base, a bearing base one and a bearing base two. The bevel gear two is installed with bearing one and the bearing one is connected inside the bevel gear bearing base. The driving axle is installed between bearing base one and bearing base two and bearing base two is located on the surface of bearing base one. The return spring is located on the surface of bearing base one and the return spring is inside the inner cavity of bearing base two. The return spring's one end is leaned against the driving axle's locating spot and the return spring's other end is leaned against bearing base two. The bevel gear one and bevel gear two are both located inside the screw rod bevel gear base. After releasing the button, the return spring separates the drive axle and the bevel gear two in order to switch the umbrella from manual opening mode to automatic opening mode.

In certain embodiments, the sliding device is installed on the screw rod bearing base's outside ring-like structure. The driving axle's one end is used to connect with bevel gear two through a clutch connection. The other end is leaned against the sliding device's inside wall. The drive axle's motions are led by the round shaped sliding device, and the drive axle distance of movement is limited by the sliding device.

In certain embodiments, the sliding device possesses a drive surface one that inclines to the sliding device sliding direction. The button possesses a drive surface two that slides and is leaned against the drive surface one. When pressing the button, the driving device moves towards the inside. The drive surface two slides relative to the drive surface one, which leads the sliding device to slide. This switches the umbrella from automatic opening mode to manual opening mode.

In certain embodiments, the sliding device includes a sliding device one and a sliding device two, which can be formed into a ring-like structure. The button is connected to the sliding device one. The driving axle is located between the screw rod connecting device and sliding device two and the driving axle is leaned against the sliding device two. The handle's spindle is inserted inside the sliding device two and the handle's spindle and driving axle can be disassembled and connected. The sliding part two leads the drive axle to move towards the bevel gear two, after the drive axle is combined with the bevel gear two, the handle can lead the drive axle to rotate.

In certain embodiments, the screw rod connecting device and power motor is connected through a coupler one, a coupler two and a coupler three. Coupler one is connected to the screw rod connecting device and coupler three is connected to the power motor's spindle. Coupler one and coupler three's eccentricity can be adjusted through coupler two. The above described coupler components are eccentricity adjustment devices available on the current market.

In certain embodiments, the button is connected to gasket one through a bolt. Gasket one can be leaned against the handle case's inside wall and avoids the button falling out of the handle case.

In certain embodiments, the umbrella pole possesses a string. The string is used to limit the motion of the screw rod bevel gear base.

In certain embodiments, both sides of the locating spot possess a gasket two. One of the gaskets two is located between the return spring and locating spot, the other gasket two is located between the locating spot and sliding part two. These two gasket twos are applied to prevent the sliding part two and return spring to rotate with the drive axle.

In comparison with the state of the art, this invention changes the ordinary application of the automatic umbrellas, while preserving the automatic rising and falling functions. It further possesses a manual rising and falling function, thus it allows the handle to operate the umbrella even when there is no power supply.

The invention is further illustrated by the following examples and figures, from which further embodiments and advantages can be drawn. These examples are meant to illustrate the invention but not to limit its scope.

### Brief description of the figures

Fig. 1 shows the umbrella's opening and closing structure.
Fig. 2 shows the umbrella's opening and closing structure in exploded view.
Fig. 3 shows the umbrella's opening and closing structure's combined clutch structure as a longitudinal section figure.
Fig. 4 shows the umbrella's opening and closing structure's combined clutch structure as a cross section figure.
Fig. 5 shows the umbrella's opening and closing structure's separated clutch structure as a cross section figure.

The following figure legends are used:
- 1.: screw rod
- 2.: power motor
- 3.: bevel gear one
- 4.: bevel gear two
- 5.: handle
- 6.: sliding device
- 61.: sliding part one (sliding device one)
- 62.: sliding part two (sliding device two)
- 63.: drive surface one
- 7.: return spring
- 8.: button
- 81.: drive surface two
- 9.: drive axle (driving axle)
- 91.: locating spot
- 10.: bevel gear one (bearing one)
- 11.: screw rod connecting part (screw rod connecting device)
- 12.: screw rod bevel gear base (screw rod bearing base)
- 13.: bevel gear base (bevel gear bearing base)
- 14.: bevel gear two (bearing two)
- 15.: umbrella pole
- 16.: handle case
- 17.: bevel gear base one (bearing base one)
- 18.: bevel gear base two (bearing base two)
- 19.: coupler one
- 20.: coupler two
- 21.: coupler three
- 22.: gasket one
- 23.: bolt
- 24.: string
- 25.: gasket two

### Examples

The following examples are provided in order to further explain the technical solution of this invention. However, the invention is not by any means limited to this application example.

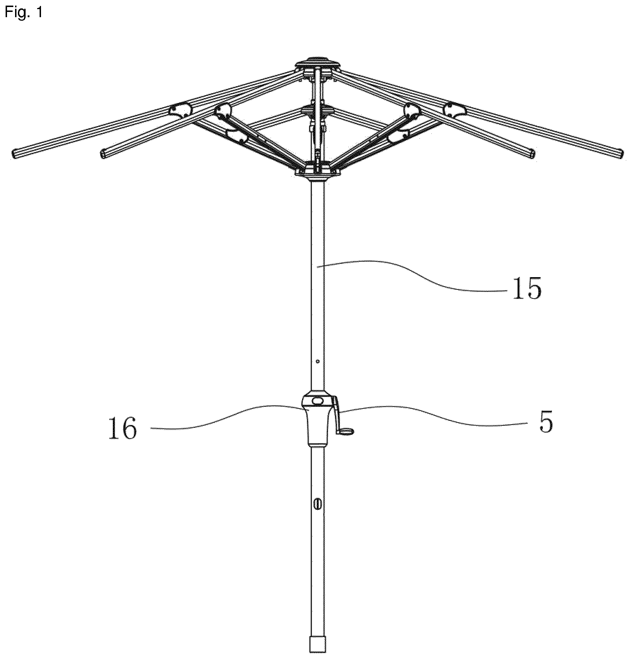

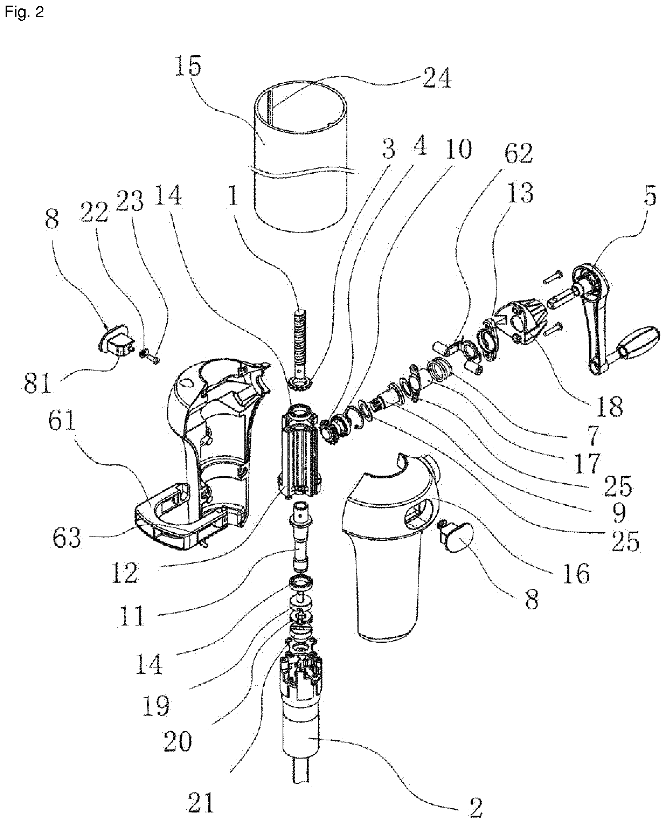

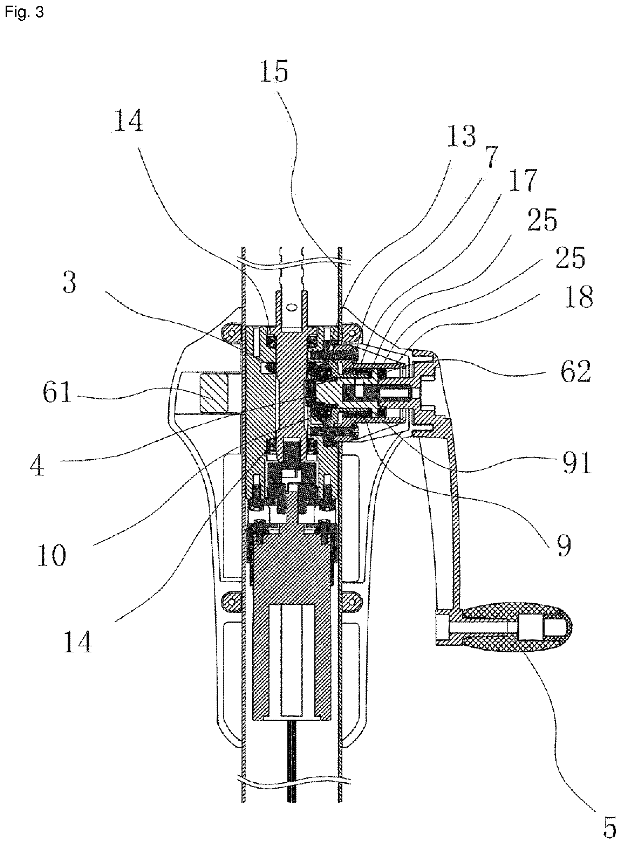

According to figure 1, figure 2 and figure 3, this application provides a device that is installed on a tube shaped umbrella pole 15, which allows an automatic and manual opening and closing of the umbrella. The umbrella pole 15 possesses a string 24 on the inside and a handle case 16 on the outside. The umbrella possesses an opening and a closing structure that includes a motor structure and a handle structure which drive the umbrella's opening and closing. The motor structure includes screw rod 1 and a power motor 2, which leads the screw rod 1 to rotate. Screw rod 1 is connected with bevel gear one 3. The handle structure includes bevel gear two 4 and handle 5. The handle 5 is connected to handle case 16. Bevel gear two 4 and bevel gear one 3 are combined through a transmission structure. Handle 5 is clutch connected to bevel gear two 4 through a transmission structure.

The clutch structure includes sliding device 6, return spring 7, button 8 and drive axle 9 to clutch connect with the bevel gear two 4. Sliding device 6 is connected to the inside of handle case 16 and the sliding device's 6 sliding direction is vertical to the umbrella pole's 15 length direction. The described driving axle 9 is connected to the sliding device 6 and the described handle 5 is connected to the driving axle 9. Screw rod 1 is installed along the umbrella pole's 15 length direction. Button 8 is installed on the side walls of the umbrella pole 15 and button 8 can bring the sliding device 6 and drive axle 9 to slide together as a whole. The sliding device 6 includes a sliding part one 61 and sliding part two 62. Sliding part two 62 can be disassembled and connected to sliding part one 61 and sliding part two 62 and sliding part one 61 can form a ring-like structure. The round shaped sliding device 6 is installed on the outside of the umbrella pole 15. Drive axle's 9 one end is clutch connected to the bevel gear two 4 and another end is leaned against the sliding part two 62. Handle's 5 axle is inserted inside the sliding part two 62 and the handle's 5 axle can be disassembled and connected to the drive axle 9. The sliding part one 61 possesses a drive surface one 63 that inclines to the sliding device 6 sliding direction. The button 8 possesses a drive surface two 81 that slides and is leaned against the drive surface one 63. Between the screw rod 1 and power motor 2 is the screw rod bevel gear base 12 and screw rod connecting part 11. Inside the umbrella pole 15 is string 24 which is installed alongside the umbrella pole's 15 length direction. String 24 is applied to limit the motion of screw rod bevel gear base 12. The screw rod connecting part's 11 upper end is fixed to the screw rod 1. The lower end is connected to the power motor 2 through coupler one 19, coupler two 20 and coupler three 21. The screw rod connecting part 11 is connected to the inside of screw rod bevel gear base 12 through bevel gear two 14. The bevel gear two 4 is installed on the inside wall of screw rod bevel gear base 12. The screw rod bevel gear base's 12 side walls successively possess bevel gear base 13, bevel gear base one 17 and bevel gear base two 18, bevel gear two 4 possesses bevel gear one 10, bevel gear one 10 is connected to the inside of the bevel gear base 13, the drive axle 9 is inserted inside the bevel gear base one 17 and bevel gear base two 18, and bevel gear base two 18 is installed on the outside of the bevel gear base one 17, return spring 7 is installed on the outside of bevel gear base one 17, and return spring 7 is located in the inside of bevel gear base two 18, the drive axle's 9 locating spots 91 possess gasket two 25 on both sides, one end of the return spring 7 is leaned against gasket two 25, another end of the return spring 7 is leaned against the bevel gear base two 18.

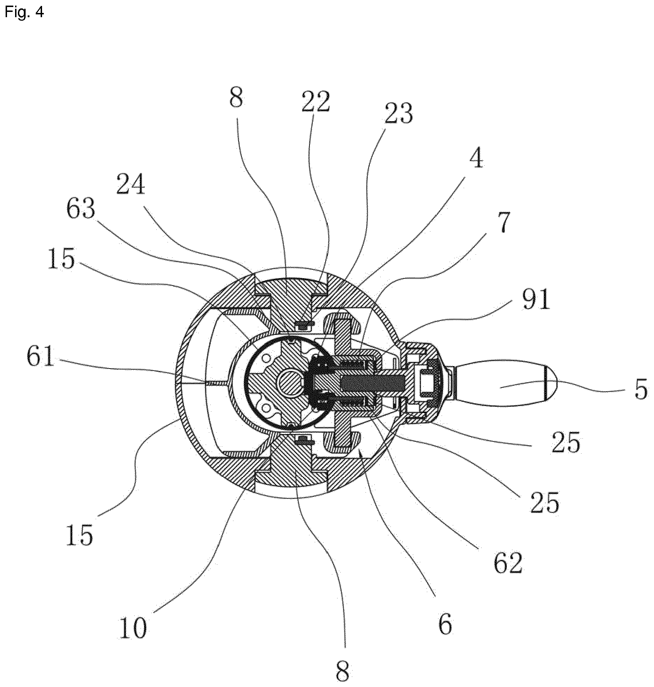

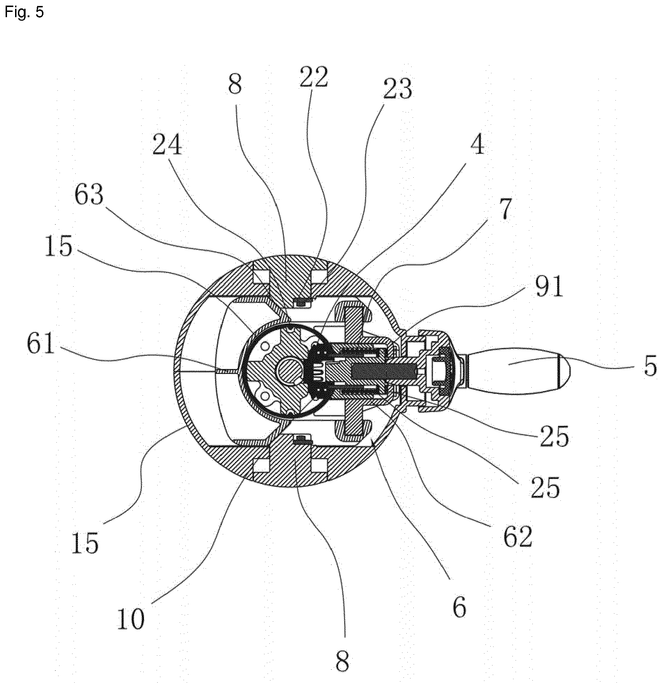

This umbrella's opening and closing structure working method are as follow: as shown in Figure 4 and Figure 5, button 8 moves towards the inside of handle case 16, through contact with the sliding part one 61 and drive surface one 63, it makes the sliding part one 61 move towards the opposite direction of handle 5, sliding part one 61 is connected to the sliding part two 62, it leads the sliding part two 62 to move together as a whole, at the same time, sliding part two 62 leads the drive axle 9 to press the return spring 7, drive axle 9 and bevel gear two 4 are combined together and coordinates with each other, handle's 5 axle is fixed to the drive axle 9, thus, when the handle 5 also presses into the handle case 16, handle's 5 rotation leads the drive axle 9 to rotate, then the bevel gear two 4 rotates, and the bevel gear two 4 leads the bevel gear one 3 to rotate, this achieves manual opening of the umbrella. As shown in Figure 5, release the button 8, or in other words, when the button 8 is not being pressed, return spring 7 returns to the initial form, the drive axle 9 separates with the bevel gear two 4, button 8 is connected to the gasket one 22 through bolt 23, gasket one 22 is leaded against the handle case's 16 inside walls, in order to prevent the button 8 from falling out, under such situation, rotating the handle 5 cannot make the screw rod 1 rotate, screw rod 1 can be led by the power motor 2 and achieve automatic opening and closing of the umbrella. The clutch in this example ensures these two methods do not disturb each other's functioning.

In this example, the screw rod 1 is used to connect the umbrella's inside pole, the upper end of the inside pole can be connected to the umbrella's umbrella plate, when the screw rod 1 rotates, the inside pole rises or falls accordingly, which leads the umbrella plate to rise and fall, in order to achieve the umbrella's opening and closing. The screw rod 1 is also used to connect the umbrella's lower umbrella plate, when the lower umbrella plate is rising or falling with the screw rod's 1 rotation, it can achieve the opening and closing of the umbrella.

The application example presented in this text is merely to illustrate the idea of this invention.

The person skilled in the art is able to make all kinds of amendments, supplements and replacements, without exceeding the limitations of the attached claims.

## Claims

1. An umbrella with a combination of an automatic and manual opening and closing structure comprising a motor structure and a handle structure for opening and closing the umbrella, wherein
- said motor structure includes a screw rod (1) and a power motor (2) that drives the screw rod (1), said screw rod (1) is connected to a bevel gear one (3),
- said handle structure includes a bevel gear two (4) and a handle (5), said bevel gear two (4) and said bevel gear one (3) are connected through a harmonic gear drive and said handle (5) is connected to said bevel gear two (4),
- said umbrella comprises a tube shaped umbrella pole (15),
wherein said screw rod (1) is installed along the umbrella pole's (15) length direction, and
**characterized in that** between said screw rod (1) and said power motor (2) is a screw rod bearing base (12) and a screw rod connecting device (11), wherein said screw rod connecting device (11)
• has an upper end that is fixed to said screw rod (1), and
• has a lower end that is connected to the power motor (2),
• is connected to said screw rod bearing base (12) through a bearing two (14),
and said bevel gear two (4) is installed on said screw rod bearing base's (12) walls.

2. The umbrella according to claim 1, wherein the umbrella comprises a tube shaped umbrella pole (15) and said umbrella pole (15) is installed with a handle case (16), comprising a clutch structure comprising
- a sliding device (6), wherein said sliding device (6):
• is located inside the handle case's (16) inner cavity,
• is located on the surface of the umbrella pole (15), and
• has a sliding direction vertical to the umbrella pole's (15) length direction,
- a return spring (7), wherein said return spring (7) is installed between said bevel gear two (4) and a driving axle (9),
- a button (8), wherein said button (8) is located on said handle case (16) and said button (8) can lead said sliding device (6) and said driving axle (9) to slide together as one, and
- said driving axle (9), which is connected to
• said bevel gear two (4) through a clutch connection,
• said sliding device (6), and
• said handle (5).

3. The umbrella according to claim 1 or 2, wherein
- said screw rod bearing base's (12) side walls successively possess a bevel gear bearing base (13), a bearing base one (17) and a bearing base two (18),
- said bevel gear two (4) is installed with bearing one (10), said bearing one (10) is connected inside the bevel gear bearing base (13),
- said driving axle (9) is installed between said bearing base one (17) and said bearing base two (18), and said bearing base two (18) is located on the surface of said bearing base one (17), and
- said return spring (7)
• is located on the surface of said bearing base one (17),
• is inside the inner cavity of said bearing base two (18),
• has one end that is leaned against said driving axle's (9) locating spot (91), and
• has another end that is leaned against said bearing base two (18).

4. The umbrella according to any one of claims 2 or 3, wherein
- said sliding device (6) is installed on said screw rod bearing base's (12) outside ring-like structure, and
- one end of said driving axle one (9) is used to connect with said bevel gear two (4) through a clutch connection, the other end is leaned against the sliding device's (6) inside wall.

5. The umbrella according to claim 4, wherein
- said sliding device (6) possesses a drive surface one (63), said drive surface one (63) inclines to said sliding device (6) sliding direction, and
- said button (8) possesses a drive surface two (81), said drive surface two (81) slides and is leaned against said drive surface one (63).

6. The umbrella according to claim 5, wherein
- said sliding device (6) includes a sliding device one (61) and a sliding device two (62) which can be formed into a ring-like structure,
- said button (8) is connected to said sliding device one (61),
- said driving axle (9) is located between said screw rod connecting device (11) and said sliding device two (62), and said driving axle (9) is leaned against said sliding device two (62), and
- said handle's (5) spindle is inserted inside said sliding device two (62), and said handle's (5) spindle and said driving axle (9) can be disassembled and connected.

7. The umbrella according to any one of claims 2 or 3, wherein said screw rod connecting device (11) and said power motor (2) is connected through a coupler one (19), a coupler two (20) and a coupler three (21).

8. The umbrella according to any one of claims 1 or 2 or 3, wherein said button (8) is connected to a gasket one (22) through a bolt (23), said gasket one (22) can be leaned against said handle case's (16) inside wall and avoids said button (8) falling out of said handle case (16).

9. The umbrella according to any one of claims 1 or 2 or 3, wherein said umbrella pole (15) possesses a string (24).

10. The umbrella according to claim 3, wherein both sides of said locating spot (91) possess a gasket two (25).

## Patentansprüche

1. Schirm mit einer Kombination aus einer automatischen und manuellen Öffnungs- und Schließstruktur, umfassend eine Motorstruktur und eine Griffstruktur zum Öffnen und Schließen des Schirms, wobei
- die Motorstruktur eine Gewindestange (1) und einen Antriebsmotor (2) beinhaltet, der die Gewindestange (1) antreibt, wobei die Gewindestange (1) mit einem Kegelradgetriebe eins (3) verbunden ist,
- die Griffstruktur ein Kegelradgetriebe zwei (4) und einen Griff (5) beinhaltet, wobei das Kegelradgetriebe zwei (4) und das Kegelradgetriebe eins (3) durch einen harmonischen Zahnradantrieb verbunden sind und der Griff (5) mit dem Kegelradgetriebe zwei (4) verbunden ist,
- der Schirm einen rohrförmigen Schirmmast (15) umfasst,
wobei die Gewindestange (1) entlang der Längsrichtung des Schirmmastes (15) installiert ist, und **dadurch gekennzeichnet, dass** zwischen der Gewindestange (1) und dem Antriebsmotor (2) eine Gewindestangenlagerbasis (12) und eine Gewindestangenverbindungsvorrichtung (11) angeordnet ist, wobei die Gewindestangenverbindungsvorrichtung (11)
• ein oberes Ende aufweist, das an der Gewindestange (1) befestigt ist, und
• ein unteres Ende aufweist, das mit dem Antriebsmotor (2) verbunden ist,
• mit der Gewindestangenlagerbasis (12) durch ein Lager zwei (14) verbunden ist,
und das Kegelradgetriebe zwei (4) an den Wänden der Gewindestangenlagerbasis (12) montiert ist.

2. Schirm nach Anspruch 1, wobei der Schirm einen rohrförmigen Schirmmast (15) umfasst und der Schirmmast (15) mit einem Griffgehäuse (16) installiert ist, das eine Kupplungsstruktur aufweist, die Folgendes umfasst
- eine Gleitvorrichtung (6), wobei die Gleitvorrichtung (6):
• sich im inneren Hohlraum des Griffgehäuses (16) befindet,
• auf der Oberfläche des Schirmmastes (15) angeordnet ist, und
• eine Gleitrichtung senkrecht zur Längsrichtung des Schirmmastes (15) aufweist,
- eine Rückstellfeder (7), wobei die Rückstellfeder (7) zwischen dem Kegelradgetriebe zwei (4) und einer Antriebsachse (9) installiert ist,
- eine Taste (8), wobei sich die Taste (8) auf dem Griffgehäuse (16) befindet und die Taste (8) die Gleitvorrichtung (6) und die Antriebsachse (9) dazu bringen kann, zusammen als eine Einheit zu gleiten, und
- die Antriebsachse (9), welche
• über eine Kupplungsverbindung mit dem Kegelradgetriebe zwei (4),
• mit der Gleitvorrichtung (6) und
• mit dem Griff (5)
verbunden ist.

3. Schirm nach Anspruch 1 oder 2, wobei
- die Seitenwände der Gewindestangenlagerbasis (12) sukzessive eine Kegelradlagerbasis (13), einen Lagerbasis eins (17) und eine Lagerbasis zwei (18) aufweisen,
- das Kegelradgetriebe zwei (4) mit einem Lager eins (10) installiert ist, wobei das Lager eins (10) innerhalb der Kegelradlagerbasis (13) verbunden ist,
- die Antriebsachse (9) zwischen der Lagerbasis eins (17) und der Lagerbasis zwei (18) installiert ist, und die Lagerbasis zwei (18) auf der Oberfläche der Lagerbasis eins (17) angeordnet ist, und
- die Rückstellfeder (7)
• auf der Oberfläche der Lagerbasis eins (17) angeordnet ist,
• innerhalb des inneren Hohlraums der Lagerbasis zwei (18) liegt,
• ein Ende aufweist, das gegen den Lokalisierungspunkt (91) der Antriebsachse (9) gelehnt ist, und
• ein anderes Ende aufweist, das gegen die Lagerbasis zwei (18) gelehnt ist.

4. Schirm nach einem der Ansprüche 2 oder 3, wobei
- die Gleitvorrichtung (6) auf der äußeren ringförmigen Struktur der Gewindestangenlagerbasis (12) installiert ist, und
- ein Ende der Antriebsachse eins (9) verwendet wird, um mit dem Kegelradgetriebe zwei (4) über eine Kupplungsverbindung zu verbinden, das andere Ende ist gegen die Innenwand der Gleitvorrichtung (6) gelehnt.

5. Schirm nach Anspruch 4, wobei
- die Gleitvorrichtung (6) eine Antriebsfläche eins (63) besitzt, wobei die Antriebsfläche eins (63) zu der Gleitrichtung der Gleitvorrichtung (6) geneigt ist, und
- die Taste (8) eine Antriebsfläche zwei (81) besitzt, die Antriebsfläche zwei (81) gegen die Antriebsfläche eins (63) gleitet und gegen diese gelehnt ist.

6. Schirm nach Anspruch 5, wobei
- die Gleitvorrichtung (6) eine Gleitvorrichtung eins (61) und eine Gleitvorrichtung zwei (62) beinhaltet, die zu einer ringförmigen Struktur geformt werden können,
- die Taste (8) mit der Gleitvorrichtung eins (61) verbunden ist,
- die Antriebsachse (9) zwischen der Gewindestangenverbindungsvorrichtung (11) und der Gleitvorrichtung zwei (62) angeordnet ist und die Antriebsachse (9) gegen die Gleitvorrichtung zwei (62) gelehnt ist, und
- die Spindel des Griffs (5) in die Gleitvorrichtung zwei (62) eingesetzt ist, und die Spindel des Griffs (5) und die Antriebsachse (9) demontiert und verbunden werden können.

7. Schirm nach einem der Ansprüche 2 oder 3, wobei die Gewindestangenverbindungsvorrichtung (11) und der Antriebsmotor (2) über eine Kupplung eins (19), eine Kupplung zwei (20) und eine Kupplung drei (21) verbunden sind.

8. Schirm nach einem der Ansprüche 1 oder 2 oder 3, wobei die Taste (8) durch einen Bolzen (23) mit einer Dichtung eins (22) verbunden ist, die Dichtung eins (22) gegen die Innenwand des Griffgehäuses (16) lehnbar ist und verhindert, dass die Taste (8) aus dem Griffgehäuse (16) fällt.

9. Schirm nach einem der Ansprüche 1 oder 2 oder 3, wobei der Schirmmast (15) eine Schnur (24) aufweist.

10. Schirm nach Anspruch 3, wobei beide Seiten des Lokalisierungspunktes (91) eine Dichtung zwei (25) aufweisen.

## Revendications

1. Parasol présentant une combinaison d'une structure d'ouverture et de fermeture automatique et manuelle comprenant une structure de moteur et une structure de poignée pour l'ouverture et la fermeture dudit parasol, où
- la structure de moteur comprend une tige de vis (1) et un moteur (2) entraînant la tige de vis (1), la tige de vis (1) étant reliée à un premier engrenage conique (3),
- la structure de poignée comprend un deuxième engrenage conique (4) et une poignée (5), le deuxième engrenage conique (4) et le premier engrenage conique (3) étant reliés par un engrenage à démultiplication harmonique et la poignée (5) étant reliée au deuxième engrenage conique (4),
- le parasol comprend un mât tubulaire (15), la tige de vis (1) étant montée dans le sens de la longueur du mât (15),
**caractérisé en ce qu'**une base de palier (12) de tige de vis et un dispositif de connexion (11) de tige de vis sont présentés entre la tige de vis (1) et le moteur (2), le dispositif de connexion (11) de tige de vis
• ayant une extrémité supérieure fixée à la tige de vis (1), et
• ayant une extrémité inférieure reliée au moteur (2),
• étant raccordé à la base de palier (12) de tige de vis par un deuxième palier (14), et le deuxième engrenage conique (4) étant monté sur les parois de la base de palier (12) de tige de vis.

2. Parasol selon la revendication 1, où ledit parasol comprend un mât tubulaire (15) et le mât (15) est monté avec un boîtier (16) de poignée présentant une structure d'embrayage comprenant
- un dispositif de coulissement (6), ledit dispositif de coulissement (6) :
• étant disposé dans la cavité intérieure du boîtier (16) de poignée,
• étant dispose à la surface du mât (15), et
• ayant un sens de coulissement vertical par rapport au sens de la longueur du mât (15),
- un ressort de rappel (7), ledit ressort de rappel (7) étant monté entre le deuxième engrenage conique (4) et un axe d'entraînement (9),
- un bouton (8), ledit bouton (8) étant disposé sur le boîtier (16) de poignée, et ledit bouton (8) pouvant commander le coulissement solidaire du dispositif de coulissement (6) et de l'axe d'entraînement (9), et
- l'axe d'entraînement (9) raccordé
• au deuxième engrenage conique (4) par un embrayage,
• au dispositif de coulissement (6), et
• à la poignée (5).

3. Parasol selon la revendication 1 ou la revendication 2, où
- les parois latérales de la base de palier (12) de tige de vis présentent successivement une base de palier (13) d'engrenage conique, une première base de palier (17) et une deuxième base de palier (18),
- le deuxième engrenage conique (4) est monté avec un premier palier (10), ledit premier palier (10) étant raccordé dans la base de palier (13) d'engrenage conique,
- l'axe d'entraînement (9) est monté entre la première base de palier (17) et la deuxième base de palier (18), et la deuxième base de palier (18) est disposée sur la surface de la première base de palier (17), et
- le ressort de rappel (7)
• est disposé sur la surface de la première base de palier (17),
• est dans la cavité intérieure de la deuxième base de palier (18),
• présente une extrémité s'appuyant contre le point de montage (91) de l'axe d'entraînement (9), et
• présente une autre extrémité s'appuyant contre la deuxième base de palier (18).

4. Parasol selon la revendication 2 ou la revendication 3, où
- le dispositif de coulissement (6) est monté sur la structure annulaire extérieure de base de palier (12) de tige de vis, et
- une extrémité du premier axe d'entraînement (9) sert au raccordement par embrayage avec le deuxième engrenage conique (4), l'autre extrémité s'appuyant contre la paroi intérieure du dispositif de coulissement (6).

5. Parasol selon la revendication 4, où
- le dispositif de coulissement (6) présente une première surface d'entraînement (63), ladite première surface d'entraînement (63) étant inclinée dans la direction de coulissement du dispositif de coulissement (6), et
- le bouton (8) présente une deuxième surface d'entraînement (81), ladite deuxième surface d'entraînement (81) étant coulissante et s'appuyant contre la première surface d'entraînement (63).

6. Parasol selon la revendication 5, où
- le dispositif de coulissement (6) comprend un premier dispositif de coulissement (61) et un deuxième dispositif de coulissement (62) pouvant être formé en structure annulaire,
- le bouton (8) est relié au premier dispositif de coulissement (61),
- l'axe d'entraînement (9) est disposé entre le dispositif de connexion (11) de tige de vis et le deuxième dispositif de coulissement (62), et l'axe d'entraînement (9) s'appuie contre le deuxième dispositif de coulissement (62), et
- le manche (5) de la poignée est engagé dans le deuxième dispositif de coulissement (62), et le manche (5) de la poignée et l'axe d'entraînement (9) peuvent être désassemblés et raccordés.

7. Parasol selon la revendication 2 ou la revendication 3, où le dispositif de connexion (11) de tige de vis et le moteur (2) sont raccordés par un premier élément de raccordement (19), un deuxième élément de raccordement (20) et un troisième élément de raccordement (21).

8. Parasol selon l'une des revendications 1, 2 ou 3, où le bouton (8) est relié à une première rondelle (22) par un boulon (23), la première rondelle (22) pouvant s'appuyer contre la paroi intérieure (16) du manche de la poignée et empêchant le bouton (8) de tomber du boîtier (16) de poignée.

9. Parasol selon l'une des revendications 1, 2 ou 3, où le mât (15) présente un cordon (24).

10. Parasol selon la revendication 3, où les deux côtés du point de montage (91) sont pourvus d'une deuxième rondelle (25).
